# FASCICULE DE BREVET EUROPEEN

(11) **EP 0 543 720 B1**
(45) Date de publication et mention de la délivrance du brevet: **03.01.1996**
(21) Numéro de dépôt: 92403092.7
(22) Date de dépôt: 18.11.1992
(51) Int. Cl.: F23R 3/04, F23R 3/26

(54) **Dispositif pour introduire une quantité controllée d'air aux intersections des cônes de carburant issus des injecteurs d'une chambre de combustion d'une turbine à gaz**
Einrichtung um bei einer Gasturbinenbrennkammer eine geregelte Luftmenge an den Überschneidungsstellen von Kraftstoffsprühkegeln einzublasen
Device for the introduction of a controlled amount of air at the intersections of the cones of injected fuel in a gas turbine combustor

(30) Priorité: 20.11.1991 FR 9114291
(43) Date de publication de la demande: 26.05.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Ansart, Denis Roger Henri, F-77590 Bois le Roi (FR); Bayle-Laboure, Gérard Joseph Pascal, F-77210 Avon (FR); Maunand, Jacques Louis Michel, F-78720 Saint Forget (FR); Sandelis, Denis Jean Maurice, F-77370 Nangis (FR)

(56) Documents cités:
- EP-A- 0 401 529
- FR-A- 1 008 197
- FR-A- 2 133 832
- GB-A- 2 024 402
- GB-A- 2 039 359

## Description

L'invention concerne une turbomachine, notamment d'aviation, dotée de moyens propres à réduire de façon sensible la formation et l'émission d'oxydes d'azote.

Les normes internationales de pollution vont vers un renforcement de la sévérité des niveaux d'oxydes d'azote admis.

Il est connu que la formation des oxydes d'azote dans la chambre de combustion est maximum lorsque la richesse dans la zone primaire est voisine du stoechiométrique. La température des gaz au foyer est alors voisine de 2 000° C. Cette condition thermodynamique se rencontre normalement aux régimes élevés de la turbomachine, c'est-à-dire dans les conditions de plein gaz.

Il a déjà été proposé des dispositifs permettant de diminuer la production des oxydes d'azote.

La demande de brevet français FR 74 08 814 publiée sous le numéro 2 261 622 divulgue le principe d'introduire de l'air refroidi en zone primaire dans le but de réduire la température des gaz de combustion et par le fait même la production d'oxydes d'azote. Cet air est introduit par une volute entourant l'injecteur. Ce dispositif nécessite des organes pour prélever une partie de l'air refoulé par le compresseur, un échangeur thermique pour refroidir l'air prélevé au moyen de l'air du canal secondaire, et des organes pour introduire le flux d'air prélevé et refroidi dans la zone primaire. Ce dispositif est, de par sa construction, encombrant et lourd. De plus, les zones sur-riches qui se trouvent àl'intersection des jets de mélange issus des deux bols adjacents produisent encore des oxydes d'azote.

Le brevet américain US 3 705 492 montre également une turbine à gaz dans laquelle les gaz issus de la turbine traversent un échangeur pour réchauffer l'air introduit dans la zone de dilution, tandis que l'air primaire pénétrant autour de l'injecteur n'est pas chauffé, ceci afin de réduire les émissions d'oxydes d'azote.

On connait en outre par FR 1 008 197 une chambre de combustion annulaire comportant des dispositions destinées à uniformiser la combustion. Les jets sortant des tuyères d'injection du combustible sont séparés par des écrans en forme de secteur, en forme de U dont les côtés comportent des perforations admettant de l'air de combustion supplémentaire.

Le but de la présente invention est de réduire la production d'oxydes d'azote à l'aide d'un dispositif peu volumineux qui ne nécessite pas d'échangeur thermique.

Le but est obtenu par le fait que l'on ventile les zones sur-riches à l'intersection des jets de mélange issus de deux bols adjacents par introduction d'air issu du compresseur haute pression, dans les conditions plein gaz.

L'invention concerne donc une turbomachine comportant un compresseur, une chambre de combustion et une turbine alimentés successivement par le même flux d'air et comportant en plus un dispositif propre à réduire la formation d'oxydes d'azote dans la chambre de combustion, ladite chambre de combustion comportant une zone primaire dans laquelle on brûle le carburant en injectant l'air primaire dans les jets de mélange issus de bols, et une zone de dilution dans laquelle on injecte de l'air de dilution pour refroidir les gaz de combustion issus de la zone primaire.

La turbomachine est caractérisée en ce que ledit dispositif comporte :
des moyens pour prélever une partie de l'air refoulé par le compresseur,
des moyens pour introduire au moins une partie de l'air prélevé dans une zone sur-riche à l'intersection des jets de mélange issus de deux bols adjacents, et
des moyens de réglage destinés à régler le débit d'air introduit dans une zone sur-riche à l'intersection des jets de mélange en fonction du régime du moteur.

De préférence les moyens de réglage permettent d'introduire la totalité de l'air prélevé dans une zone sur-riche à l'intersection des jets de mélange dans les conditions plein gaz.

Avantageusement les moyens de réglage sont disposés à l'extérieur du carter de la chambre de combustion.

Selon un premier mode de réalisation, les moyens de réglage comportent un clapet réglable interposé entre les moyens de prélèvement d'air et les moyens d'introduction d'air.

Selon un deuxième mode de réalisation, les moyens de réglage comportent un clapet à trois voies interposé entre les moyens de prélèvement d'air et les moyens d'introduction d'air, et ledit clapet à trois voies est relié à la zone de dilution, ledit clapet partageant l'air prélevé en une première partie d'air introduite à l'intersection des cônes de carburant et une deuxième partie d'air injectée dans la zone de dilution.

D'autres avantages et caractéristiques ressortiront à la lecture de la description suivante faite à titre d'exemple et en référence aux dessins annexés dans lesquels :

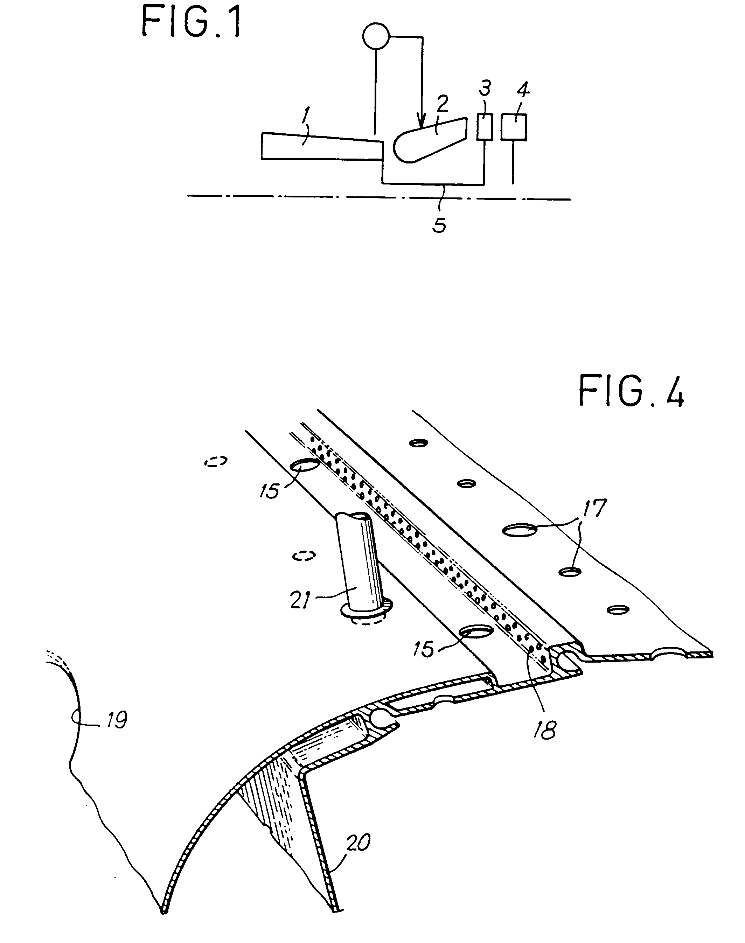

la figure 1 représente un schéma de principe de l'invention,

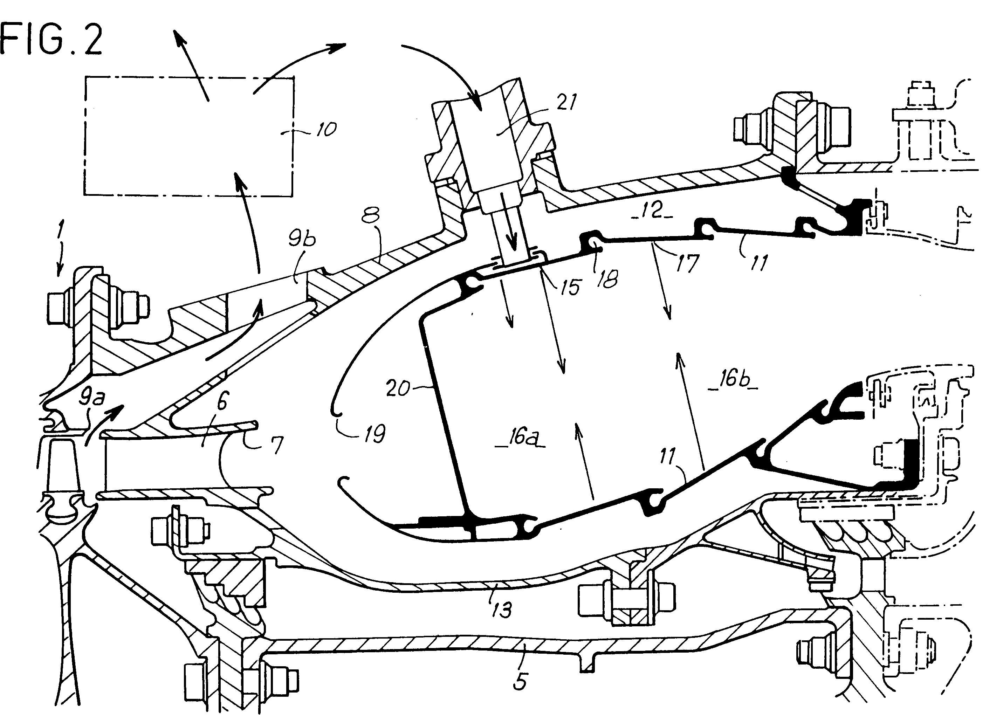

la figure 2 est une coupe de la chambre de combustion montrant le dispositif de l'invention selon un premier mode de réalisation,

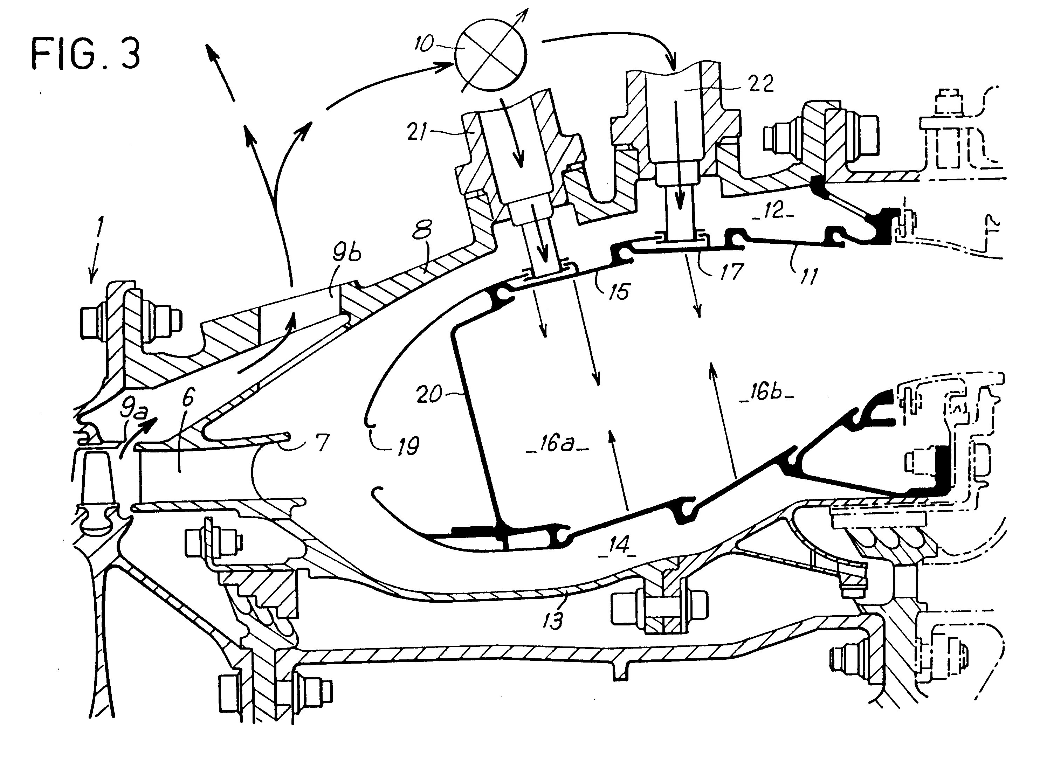

la figure 3 est une coupe de la chambre de combustion montrant le dispositif de l'invention selon un deuxième mode de réalisation, et
la figure 4 montre une vue locale de la chemise intérieure de la chambre de combustion.

Les dessins montrent une turbomachine dont le moteur comprend un compresseur 1, une chambre de combustion 2 et une turbine 3 alimentés successivement par le même flux d'air. Une deuxième turbine 4 peut être disposée en aval de la turbine 3. La turbine 3 reçoit des gaz à haute température de la chambre de combustion 2 et entraîne en rotation le compresseur 1 par l'intermédiaire d'un arbre central 5.

Le compresseur 1 refoule de l'air mis en pression à travers une grille d'aubes directrices de sortie 6 équidistantes et disposées en cercle selon les rayons du moteurs entre les parois d'un diffuseur 7. Une partie de l'air mis en pression par le compresseur 3 est prélevée en amont du diffuseur 7 et traverse le carter extérieur 8 par des orifices 9a et 9b pour être dirigée vers un clapet 10, situé à l'extérieur du carter extérieur 8.

La chambre de combustion 2 est délimitée par une chemise intérieure 11 séparée du carter extérieur 8 par un premier canal 12 et du carter intérieur 13 par un deuxième canal 14. Les canaux 12 et 14 dirigent l'air refoulé par le compresseur 1 à travers des ouvertures appropriées 15 dans la zone primaire 16a de la chambre de combustion 2, à travers des ouvertures 17 dans la zone de dilution 16b des gaz de combustion formés dans la zone primaire 16a. Les canaux 12 et 14 fournissent également l'air destiné à refroidir la chemise intérieure 11 par des évents 18.

L'extrémité amont de la chemise intérieure 11 est conçue pour agir comme séparateur de flux et répartir l'air refoulé par le compresseur 1 entre les canaux 12 et 14 et une ouverture amont 19. Un dispositif d'injection 20 est situé à l'intérieur de la chemise 11. Ce dispositif d'injection 20 comporte une pluralité de bols régulièrement répartis dans un plan perpendiculaire à l'axe de rotation de la turbomachine.

Le dispositif d'injection 20 est alimenté en carburant pressurisé par une canalisation non représentée sur le dessin et qui traverse le carter extérieur 8.

Selon l'invention, des tubulures 21 traversent le carter extérieur 8 et débouchent dans la zone primaire 16a. Ces tubulures 21 sont alimentées en air par le clapet 10. Les tubulures 21 dirigent l'air dans la zone primaire 16a à l'intersection des cônes de carburant issus de deux bols adjacents. Il faut noter que les ouvertures 15 injectent l'air primaire directement dans les cônes de carburant.

Le clapet 10 est régulé de telle manière, que dans des conditions plein gaz, la plus grande partie de l'air prélevé à la sortie du compresseur 1 est injectée à l'intersection des cône de carburant. Ceci permet de ventiler les zones sur-riches de la chambre de combustion et d'éviter la production d'oxydes d'azote à haut régime.

Selon une variante de réalisation, le clapet 10 est un clapet à trois voies et il est relié à une tubulure supplémentaire 22 qui traverse le carter extérieur 8 et débouche dans la zone de dilution 16b. Ce clapet à trois voies partage le débit d'air prélevé à la sortie du compresseur 1 en une première partie d'air destinée à être introduite à l'intersection des cônes de carburant et une deuxième partie d'air injectée dans la zone de dilution 16b, en fonction du régime de la turbomachine.

Dans les conditions plein gaz, la plus plus grande partie de l'air prélevé est introduit en zone primaire 16a à l'intersection des cônes de carburant par les tubulures 21. Au démarrage ou en régime de croisière, la température du gaz étant relativement faible dans la zone primaire, la plus grande partie de l'air prélevé est introduite dans la zone de dilution 16b.

## Revendications

1. Turbomachine comportant un compresseur (1), une chambre de combustion (2) et une turbine (3) alimentés successivement par le même flux d'air et comportant en plus un dispositif propre à réduire la formation d'oxydes d'azote dans la chambre de combustion (2), ladite chambre de combustion (2) comportant une zone primaire (16a) dans laquelle on brûle le carburant en injectant de l'air primaire dans les jets de mélange issus de bols, et une zone de dilution (16b) dans laquelle on injecte de l'air de dilution pour refroidir les gaz de combustion issus de la zone primaire (16a) caractérisée en ce que ledit dispositif comprend :
des moyens (9a, 9b) pour prélever une partie de l'air refoulé par le compresseur (1),
des moyens (21) pour introduire au moins une partie de l'air prélevé dans une zone sur-riche à l'intersection des jets de mélange issus des deux bols adjacents, et
des moyens de réglage (10) destinés à régler le débit d'air introduit dans une zone sur-riche à l'intersection des jets de mélange en fonction du régime du moteur.

2. Turbomachine selon la revendication 1, caractérisée en ce que les moyens de réglage (10) permettent d'introduire la totalité d'air prélevé dans une zone sur-riche à l'intersection des jets de mélange dans les conditions plein gaz.

3. Turbomachine selon la revendication 2, caractérisée en ce que les moyens de réglage (10) sont disposés à l'extérieur du carter (8) de la chambre de combustion (1).

4. Turbomachine selon la revendication 3, caractérisée en ce que les moyens de réglage (10) comportent un clapet réglable interposé entre les moyens de prélèvement d'air (9a, 9b) et les moyens d'introduction d'air (21).

5. Turbomachine selon la revendication 3, caractérisée en ce que les moyens de réglage (10) comportent un clapet à trois voies interposé entre les moyens de prélèvement d'air (9a, 9b) et les moyens d'introduction d'air (21), et
en ce que ledit corps de clapet à trois voies est relié à la zone de dilution (16b), ledit clapet partageant l'air prélevé en une première partie d'air introduite à l'intersection des cônes de carburant et une deuxième partie d'air injectée dans la zone de dilution (16b).

## Patentansprüche

1. Turbomaschine, die einen Kompressor (1), eine Verbrennungskammer (2) und eine Turbine (3), die sukzessiv vom selben Luftstrom gespeist werden, umfaßt und zusätzlich eine zum Reduzieren der Bildung von Stickoxiden in der Verbrennungskammer (2) geeignete Vorrichtung aufweist und wobei in der Verbrennungskammer (2) eine Primärzone (16a), in der der Kraftstoff unter Einpressen von Primärluft in die von schalenförmigen Behältern abgegebenen Gemischströme verbrannt wird, sowie eine Verdünnungszone (16b), in die Verdünnungsluft zum Abkühlen der Verbrennungsgase aus der Primärzone (16a) eingepreßt wird, vorgesehen ist,
dadurch **gekennzeichnet**,
daß die Vorrichtung umfaßt:
Mittel (9a,9b) zum Entnehmen eines Teiles der durch den Kompressor gespannten Luft,
Mittel (21) zum Einführen von mindestens einem Teil der entnommenen Luft in die überreiche Zone bei der Überschneidungsstelle der Gemischströme von zwei benachbarten schalenförmigen Behältern,
Mittel zum Regulieren (10) des Bedarfs an Luft, die in die überreiche Zone bei der Überschneidungsstelle der Gemischströme in Abhängigkeit vom Betrieb des Motors eingeführt wird.

2. Turbomaschine gemäß Anspruch 1,
dadurch **gekennzeichnet**,
daß die Mittel zum Regulieren (10) das Einbringen der gesamten entnommenen Luft in die überreiche Zone bei der Überschneidungsstelle der Gemischströme unter Vollgasbedingungen erlaubt.

3. Turbomaschine gemäß Anspruch 2,
dadurch **gekennzeichnet**,
daß die Mittel zum Regulieren außerhalb vom Gehäuse (8) der Verbrennungskammer (1) angeordnet sind.

4. Turbomaschine gemäß Anspruch 3,
dadurch **gekennzeichnet**, daß die Mittel zum Regulieren (10) eine Stellklappe aufweisen, die zwischen den Mitteln zum Entnehmen der Luft (9a,9b) und den Mitteln zur Lufteinführung (21) angeordnet ist.

5. Turbomaschine gemäß Anspruch 3,
dadurch **gekennzeichnet**, daß die Mittel zum Regulieren (10) eine Dreiwegeklappe aufweisen, die zwischen den Mitteln zum Entnehmen der Luft (9a,9b) und den Mitteln zur Lufteinführung (21) liegt, und daß der Dreiwegeklappenkörper an die Verdünnungszone (16b) anschließt, die Klappe die entnommene Luft aufteilt in einen ersten Teil der Luft, die in die Überschneidungsstelle der Treibstoffkegel eingeführt wird, und in einen zweiten Teil der Luft, der in die Verdünnungszone (16b) eingepreßt wird.

## Claims

1. Turbine machine including a compressor (1), a combustion chamber (2) and a turbine (3) which are fed successively with the same flow of air, and further including a device suitable for reducing the formation of nitrogen oxides in the combustion chamber (2), the said combustion chamber (2) including a primary region (16a) in which the fuel is burned by injecting the primary air into the mixing jets which come out of bowls, and a dilution region (16b) into which dilution air is injected in order to cool the combustion gases coming out of the primary region (16a), characterized in that the said device comprises:
means (9a, 9b) for tapping off some of the air delivered by the compressor (1),
means (21) for introducing at least some of the air tapped off into an over-rich region at the intersection of the mixing jets which come out of the two adjacent bowls, and
adjustment means (10) intended for adjusting the flow rate of air introduced into an over-rich region at the intersection of the mixing jets as a function of the speed of the engine.

2. Turbine machine according to Claim 1, characterized in that the adjustment means (10) make it possible to introduce all of the air tapped off into an over-rich region at the intersection of the mixing jets under full-throttle conditions.

3. Turbine machine according to Claim 2, characterized in that the adjustment means (10) are arranged outside the casing (8) of the combustion chamber (1).

4. Turbine machine according to Claim 3, characterized in that the adjustment means (10) include an adjustable valve interposed between the means for tapping off air (9a, 9b) and the air introduction means (21).

5. Turbine machine according to Claim 3, characterized in that the adjustment means (10) include a three-way valve interposed between the means for tapping off air (9a, 9b) and the air introduction means (21), and in that the said three-way valve body is linked to the dilution region (16b), the said valve dividing the tapped-off air into a first part of air introduced at the intersection of the fuel cones and a second part of air injected into the dilution region (16b).
